# FASCICULE DE BREVET EUROPEEN

(11) **EP 1 176 302 B1**
(45) Date de publication et mention de la délivrance du brevet: **14.12.2005**
(21) Numéro de dépôt: 01401918.6
(22) Date de dépôt: 18.07.2001
(51) Int. Cl.: F02K 1/72

(54) **Inverseur de poussée pour moteur à réaction**
Schubumkehrvorrichtung für einen Strahlmotor
Thrust reverser for a jet engine

(30) Priorité: 24.07.2000 FR 0009660
(43) Date de publication de la demande: 30.01.2002
(73) Titulaire: HUREL-HISPANO MEUDON, 92360 Meudon-la-Forêt (FR)
(72) Inventeur: Fournier, Alain, 92350 Le Plessis Robinson (FR); Laboure, Bernard, 78140 Velizy (FR); Standish, Robert, 92210 Saint-Cloud (FR)
(74) Mandataire: Sauvage, Renée

(56) Documents cités:
- FR-A- 1 260 040
- FR-A- 2 349 738
- US-A- 3 511 055
- US-A- 4 442 987

## Description

La présente invention concerne, d'une manière générale, les inverseurs de poussée pour moteurs à réaction, plus particulièrement les inverseurs.. dits à grilles (connus également sous le nom d'inverseurs à cascades), et encore plus particulièrement les inverseurs à grilles "naturels".

Les inverseurs à grilles utilisent :
- pour créer un puits de déviation dans le capotage de la nacelle du moteur, une ouverture ménagée dans ledit capotage, laquelle ouverture est fermée, en situation de poussée directe des gaz, par un capot coulissant et dégagée, en situation d'inversion de poussée, par déplacement en translation vers l'aval (par référence au sens d'écoulement des gaz) dudit capot coulissant, un canal de soufflante étant défini entre une peau intérieure et une peau extérieure, dans laquelle s'intègre la peau intérieure du capot coulissant en situation de poussée directe, ladite ouverture étant équipée de grilles (ou cascades) profilées de manière à piloter le jet inversé, et
- pour sensiblement bloquer le flux froid qui circule dans le canal de soufflante ou fan et le dévier vers l'avant au travers des grilles de l'ouverture ainsi dégagée dans le capotage, des moyens dont la nature dépend de la relation entre le rayon de ladite peau extérieure du canal de soufflante et celui de la peau intérieure de ce dernier.

Ainsi, lorsque cette relation ne varie sensiblement pas, il est nécessaire pour dévier le flux froid de prévoir une série de petites portes de blocage qui sont articulées, d'une part, sur ledit capot coulissant et d'autre part, via une bielle, sur la paroi en vis-à-vis, et qui viennent se placer en travers du canal de soufflante lorsque s'opère la translation du capot coulissant vers l'aval.

Lorsque, par contre, en un point du canal de soufflante, cette relation entre rayons présente un minimum, ce qui se produit lorsque le moteur forme une bosse qu'épouse ladite peau intérieure, il est possible de tirer avantage de cette géométrie pour supprimer les petites portes de blocage et leurs bielles et assurer le blocage du canal de soufflante au moyen du capot coulissant lui-même. Pour ce faire, on lui intègre une partie plus amont de la peau intérieure du canal de soufflante en donnant ainsi à l'extrémité intérieure amont du capot coulissant une configuration en bec qui, en bout de course vers la position déployée du capot coulissant, vient se placer au voisinage de ladite bosse et bloque ainsi sensiblement le canal de soufflante.

Le type d'inverseur résultant est ce que l'on appelle un inverseur à grilles (à cascades) "naturel", le capot coulissant bloquant "naturellement" le canal de soufflante.

Pour plus de détails sur ce type d'inverseurs, on peut de reporter à FR-A-2 132 380, et US-A-4 232 516.

Si l'utilisation du capot coulissant lui-même pour bloquer le canal de soufflante a l'avantage de réduire la complexité de la structure en supprimant portes de blocage et bielles, en revanche, elle comporte certaines limitations.

L'intégration de cette partie en bec dans le capot coulissant allonge ce dernier, côté amont, de sorte que le capot coulissant doit être déplacé en translation sur une plus grande distance pour dégager l'ouverture ménagée dans le capotage de la nacelle. Il s'ensuit que l'on doit utiliser des vérins ayant une course plus longue pour assurer le déplacement voulu.

Par ailleurs, pour pouvoir déposer et remonter le capot coulissant à des fins d'installation et de maintenance en le faisant glisser sur des rails, il est nécessaire que le rayon de l'extrémité amont de la peau intérieure du capot coulissant (c'est-à-dire de la pointe du bec) soit supérieur au rayon maximal de la peau intérieure du canal de soufflante (c'est-à-dire de la bosse). Il s'ensuit que, lorsque le capot coulissant est en situation d'inversion de poussée, il reste toujours nécessairement une fuite de flux froid en poussée directe entre le bec du capot coulissant et la bosse de la peau intérieure du canal de soufflante.

D'un autre côté, plus le bec du capot coulissant est proche de la bosse, plus la face amont du capot coulissant est éloignée de l'extrémité aval de l'ensemble à grilles. Cette face amont est composée d'une cloison qui fait suite au bec et qui s'étend vers l'extérieur depuis la paroi intérieure du capot coulissant en direction de sa paroi extérieure, sans l'atteindre, l'espace laissé vacant formant accès à une cavité ménagée dans le capot coulissant pour y loger l'ensemble à grilles en situation de poussée directe.

Lorsqu'en situation d'inversion de poussée, le bec du capot coulissant est proche de la bosse, la cloison se trouve sensiblement en aval de l'ensemble à grilles, laissant un trou béant à ce niveau, par lequel s'échappe une partie du flux froid dévié, avec une perte d'efficacité quant au pilotage dudit flux. Il en est ainsi dans le cas de l'inverseur de poussée à grilles naturel que divulgue FR-A-1 260 040, selon deux variantes : l'une dans laquelle les grilles 1 se déplacent en translation avec le carénage 7, l'autre dans laquelle les grilles 1' sont fixes. Quelle que soit la variante, il est clair qu'en situation de jet inversé, il reste une large section 9 non obturée de tuyère.

Enfin, et ce n'est pas le moindre inconvénient des inverseurs à grilles naturels, une partie des gaz déviés qui ne s'échappent pas via les grilles ou le trou laissé béant entre le bec du capot coulissant et la bosse, s'engouffre dans la cavité précitée. Il en résulte un bruit considérable, pouvant atteindre 150 dB, et des risques pour la tenue structurale du capot coulissant, qui doit être renforcé, d'où une augmentation du poids.

Pour remédier à ces inconvénients, l'idéal serait que le rayon Re de la peau extérieure du canal de soufflante, pris dans le plan P1, dit "plan amont", transversal à l'axe longitudinal de l'inverseur et passant par l'extrémité amont du capot coulissant en situation de poussée directe, soit inférieur au rayon maximal Ri de la peau intérieure du canal de soufflante, pris dans un plan P2, dit "plan aval", parallèle au plan P1 et en aval de celui-ci.

FR-A-2 349 738 divulgue un inverseur de poussée à grilles naturel imaginé selon ce principe en ce sens qu'il utilise, pour boucher le canal de fan 24 en situation d'inversion de poussée, la forme particulière du carter 16, dont le rayon maximum est supérieur à celui de la partie arrière 28 dans sa partie avant interne. Cependant, si ce document précise et illustre que l'élément 28 vient en butée contre le carter 16, il n'indique pas comment se solutionne le problème de la mise en place de l'élément 28 qui est plus petit dans sa partie avant que le carter 16.

C'est précisément ce problème que l'invention vise à résoudre.

D'une façon générale, les capotages d'inverseur de poussée sont réalisés en deux demi-capotages sensiblement symétriques par rapport à un plan de coupe longitudinal, lesdits demi-capotages étant articulés le long de l'un de leurs bords longitudinaux et verrouillables entre eux le long de leurs bords longitudinaux opposés. Chaque demi-capotage d'inverseur comporte un demi-capot coulissant monté coulissant sur la structure fixe du demi-capotage d'inverseur auquel il appartient par le biais d'une paire de rails disposés sensiblement dans ledit plan de coupe et, en grossière approximation, diamétralement opposés, lesdits rails coopérant avec des chemins de roulement complémentaires.

Le plan de coupe est à 12 heures/6 heures, si l'inverseur équipe une nacelle sous voilure et à 3 heures/9 heures, si l'inverseur équipe une nacelle latérale. Pour simplifier, on ne se référera dans la suite qu'au cas 12 heures/6 heures, étant entendu que les explications valent mutatis mutandis pour le cas 3 heures/9 heures.

Selon l'invention, l'extrémité intérieure amont du capot coulissant comporte une semelle amovible qui s'étend vers l'amont à partir de ladite extrémité et qui est intégrée au profil de la peau extérieure du canal de soufflante, le rayon Re₁ de ladite semelle étant inférieur au rayon Ri précité et le rayon Re₂ de ladite extrémité amont dudit capot coulissant étant supérieur audit rayon Ri.

En d'autres termes, on munit le capot coulissant d'un bec rapporté et démontable (la semelle), en donnant à l'extrémité amont de la peau interne du capot coulissant, en aval de la semelle, un rayon supérieur à celui de la bosse et en donnant à la semelle ou à l'extrémité amont de la semelle un rayon inférieur à celui de la bosse.

Dans la pratique, le capot coulissant étant réalisé en deux demi-capots, la semelle rapportée est, de même, réalisée en deux demi-semelles.

Ainsi, chaque demi-capot coulissant, à l'état dépourvu de demi-semelle, peut coulisser de part et d'autre de la bosse, à des fins d'installation ou de maintenance, le coulissement se faisant sur le système à deux rails continus de l'art antérieur. La demi-semelle est montée sur le demi-capot coulissant une fois que celui-ci a franchi la bosse de l'aval à l'amont, et est démontée du demi-capot avant que celui-ci n'ait à franchir la bosse de l'amont à l'aval.

Pour solutionner le problème du franchissement de la bosse de rayon Ri par l'extrémité amont du capot coulissant de rayon Re, plus petit que Ri, le bec du capot coulissant peut venir se placer à proximité de la bosse de la peau intérieure du canal de soufflante au terme d'une course plus courte dudit capot que dans les inverseurs à grilles naturels classiques, d'où la possibilité de revenir à des vérins plus courts pour la manoeuvre du capot coulissant.

En outre, lorsque le bec du capot coulissant est à proximité de la bosse, la cloison appartenant à l'extrémité amont du capot coulissant peut se trouver à proximité immédiate du bord aval de l'ensemble à grilles, éliminant la possibilité pour les gaz inversés de sortir par l'ouverture ménagée dans le capotage sans passer au travers des grilles, mais surtout empêchant qu'une partie des gaz viennent s'engouffrer dans la cavité du capot coulissant.

L'invention sera mieux comprise, et d'autres caractéristiques apparaîtront, à la lecture de la description ci-après faite en référence aux dessins annexés dans lesquels :
- la figure 1 est une coupe longitudinale partielle d'une partie supérieure de nacelle comportant un inverseur de poussée à grilles naturel en situation de poussée directe et illustrant l'état de la technique ;
- la figure 2 est une vue similaire à la figure 1, mais montrant l'inverseur connu en situation d'inversion de poussée ;
- la figure 3 est une vue identique à la figure 2 mais montrant spécifiquement les écoulements en situation d'inversion de poussée ;
- la figure 4 est une coupe longitudinale partielle d'une partie supérieure de nacelle comportant un inverseur de poussée à grilles naturel en situation de poussée directe et illustrant l'invention ;
- la figure 5 est une vue similaire à la figure 4, mais montrant l'inverseur selon l'invention en situation d'inversion de poussée ;
- la figure 6 est une vue identique à la figure 5 mais montrant spécifiquement les écoulements en situation d'inversion de poussée ; et
- la figure 7 illustre un mode de montage possible pour une semelle rapportée.

Dans les références utilisées ci-après, "e" signifie extérieur, et "i" signifie intérieur. Pour ne pas alourdir inutilement la description, on négligera, dans la suite, le fait que le capotage d'inverseur et le capot coulissant sont chacun constitués en deux parties.

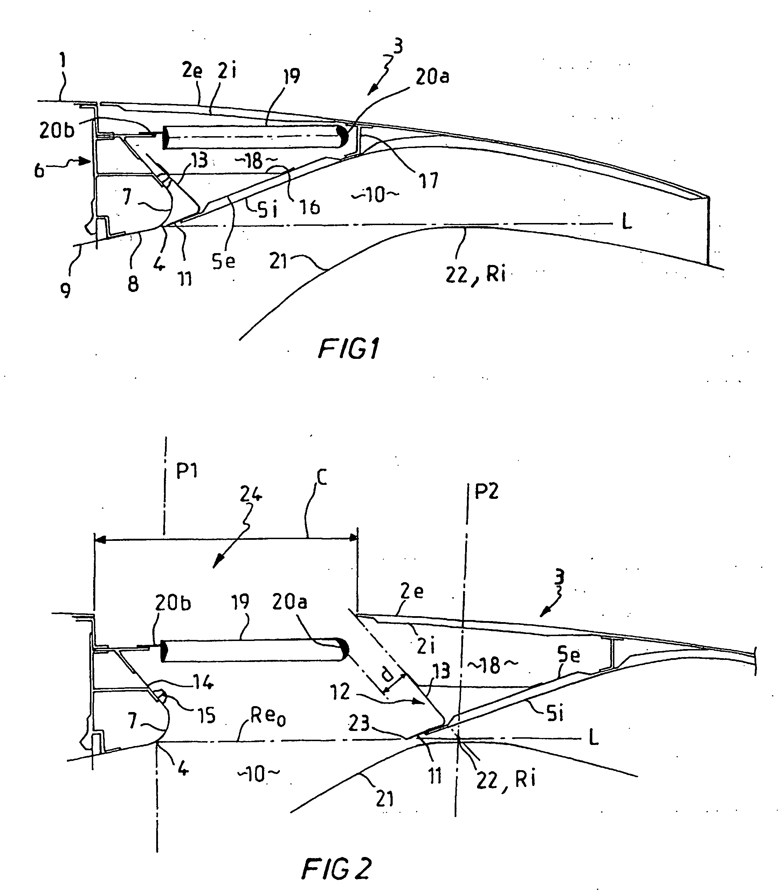

Pour illustrer l'état antérieur de la technique, on n'a pas retenu FR-A-2 349 438 précité car, comme indiqué plus haut, si ce document représente un inverseur dans lequel Re<Ri, il ne divulgue pas les moyens permettant, en pratique, le montage de la structure correspondante. Or, sans ces moyens, la relation Re<Ri est séduisante mais irréalisable. On a donc illustré, l'art antérieur par un schéma d'inverseur de poussée naturel classique (figures 1 à 3).

Si l'on se reporte à la figure 1, on voit une partie de nacelle dont la peau extérieure est désignée par 1. Dans la continuité aérodynamique de cette peau 1 se trouve la peau extérieure 2e d'une double paroi extérieure 2e,2i appartenant à un capot coulissant 3, défini en outre par une double paroi intérieure 5e, 5i.

La nacelle comporte une structure fixe 6 qui inclut un bord de déviation arrondi 7 dont une partie 8 contribue à constituer la peau extérieure 9 du canal de soufflante 10. Y contribue également, dans la situation de poussée directe représentée, la peau 5i appartenant au capot coulissant 3.

Comme on le voit, l'extrémité amont de la peau 5e est constituée par le petit côté, ou semelle, 11 d'une pièce grossièrement en forme d'équerre 12 (figure 2) d'angle inférieur à 90°, et dont le grand côté 13, ou cloison, est sensiblement parallèle à la partie 14 (figure 2) du bord de déviation 7 en vis-à-vis.

Un joint 15 monté sur la partie 14 (figure 2) du bord de déviation 7 est interposé entre celle-ci et la cloison 13 de la pièce 12 et assure l'étanchéité en situation de poussée directe.

La pièce 12 est solidarisée à demeure à la paroi 5e,5i du capot coulissant 3, notamment, au moyen d'un raidisseur 16. Un autre raidisseur 17 est monté, entre les parois 2i et 5e. La paroi 2i et les raidisseurs 16 et 17 délimitent, au sein du capot coulissant 3, une cavité 18 destinée à loger un ensemble 19 à grilles ou cascades ayant une extrémité aval 20a et dont l'extrémité amont 20b est fixée sur la structure fixe 6.

Le canal de soufflante 10 est, comme on l'a vu plus haut, défini par la peau extérieure 9 et, comme on va le décrire maintenant, par une peau intérieure 21.

Comme il ressort de la figure 1, cette peau présente une bosse 22, qui résulte de la configuration particulière du moteur.

Si l'on en vient à la figure 2, montrant la même structure qu'à la figure 1 mais en situation d'inversion de poussée, on voit que le capot 3 a coulissé vers l'aval, selon une course C, en dégageant une ouverture 24 dans le capotage de la nacelle et en bloquant sensiblement le canal de soufflante 10. Plus précisément, la semelle 11 de la pièce 12 est venue se placer en une position sensiblement tangentielle à la bosse 22, tandis que la cloison 13 de la pièce 12 est venue se placer en travers du canal de soufflante 10.

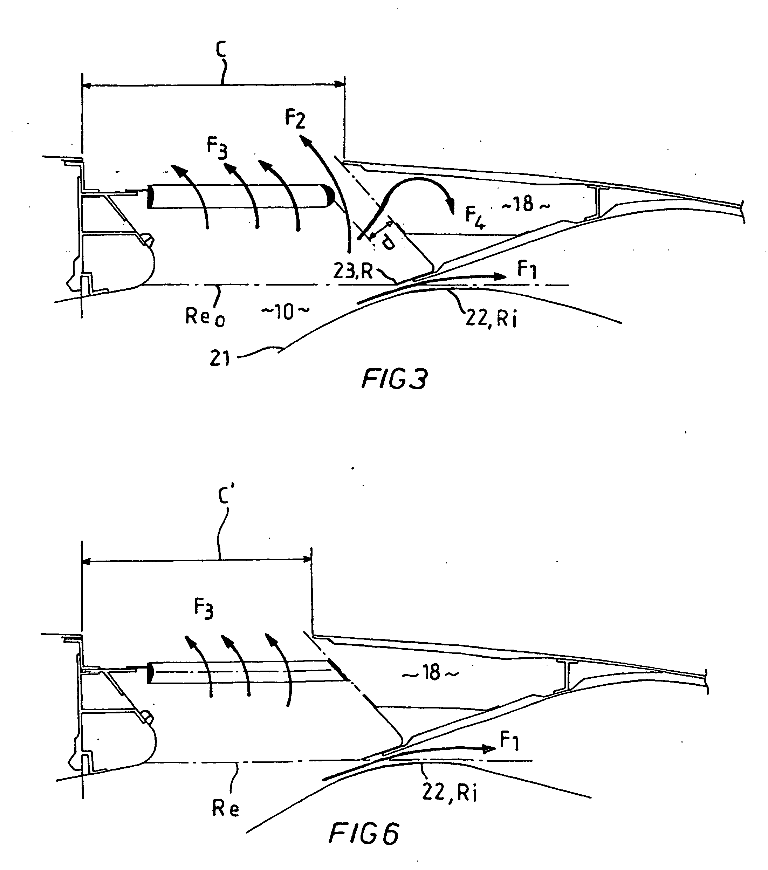

Pour pouvoir poser et déposer le capot coulissant 3 en le faisant coulisser entièrement vers l'aval, il est nécessaire que l'extrémité amont 23 de la semelle 11 de la pièce 12 ne vienne pas buter dans la bosse 22 au cours de son coulissement et qu'un jeu de fonctionnement soit prévu entre elles. La ligne L indique le rapprochement maximal entre l'extrémité 23 et la bosse 22. Cette ligne L est sécante au bord de déviation 7 au point 4, qui détermine le rayon maximal Re₀ de l'extrémité amont 23 de la semelle 11 de la pièce 12 - donc le rayon de la peau extérieure 9 du canal de soufflante dans le plan transversal P1, dit "plan amont", qu'occupe cette extrémité amont du capot coulissant en position de poussée directe. Ce rayon Reₒ est donc un peu supérieur au rayon Ri de la peau intérieure 21 au niveau de la bosse 22, c'est-à-dire dans le plan P2, dit "plan aval", parallèle à P1. Il s'ensuit une nécessaire fuite en poussée directe selon la flèche F1 (figure 3).

En outre, comme il ressort de la figure 2, la cloison 13 de la pièce 12 se trouve largement en aval (distance d) de l'extrémité aval 20a de l'ensemble à grilles 19. Il s'ensuit qu'une partie du flux froid dévié s'échappe selon la flèche F2 (figure 3), c'est-à-dire sans être piloté comme il devrait l'être selon les flèches F3 (figure 3). Mais surtout, une partie du flux froid dévié vient s'engouffrer dans la cavité 18 avec pour résultat d'importantes turbulences néfastes désignées par la flèche F4 (figure 3) et un bruit considérable.

La solution ne peut consister en une prolongation de l'ensemble à grilles 19 vers l'aval car sa longueur est limitée, d'une part, par l'espace disponible dans le capot coulissant 3 et, d'autre part, dans l'absolu pour des raisons d'aérodynamisme. Ainsi, même s'il était possible de prolonger l'ensemble à grilles côté aval, il faudrait le raccourcir côté amont, ce qui à son tour imposerait d'autres modifications de structure dans la zone du bord de déviation.

L'homme du métier peut penser qu'il serait remédié aux inconvénients énoncés ci-dessus en donnant au rayon Re qu'a la peau extérieure 9 dans le plan perpendiculaire à l'axe de la nacelle et passant par l'extrémité amont du capot coulissant, une valeur inférieure au rayon Ri, mais se pose alors la question du franchissement, par la zone de plus petit rayon Re, de la zone de plus grand rayon Ri.

L'invention résout ce problème en décalant convenablement la pièce 12, vers l'amont, et ce, en réalisant le capot coulissant et la semelle sous la forme de deux pièces séparées réunies par des moyens démontables

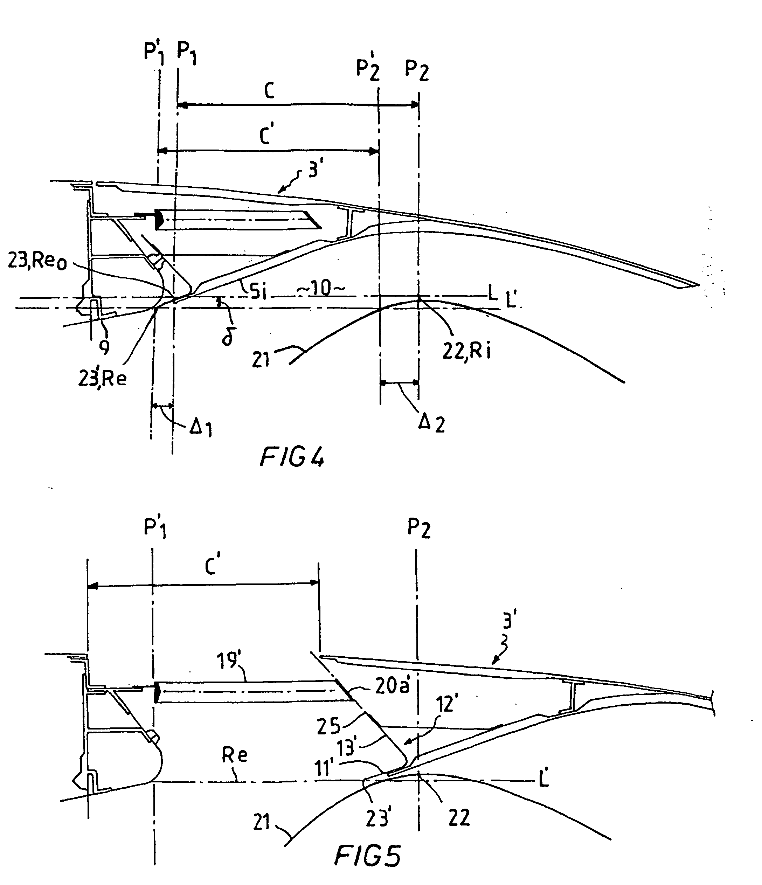

La structure résultante a la géométrie globale illustrée aux figures 4 à 6.

Dans ces figures 4 à 6, on n'a identifié que les éléments utiles pour expliquer l'invention, les éléments non identifiés étant identiques à ceux des figures 1 à 3.

L'objectif étant de réduire la course du capot coulissant, source de tous les inconvénients énoncés plus haut, on tire avantage, pour ce faire, de la différence entre la pente qu'a, vers l'amont, la peau extérieure 9 du canal de soufflante au niveau de l'extrémité amont du capot coulissant et la pente qu'a, vers l'amont, la peau intérieure 21 dudit canal au niveau de la bosse 22.

Plus précisément, comme il ressort de la figure 4, la ligne L définie à propos des figures 1 et 2 illustrant l'art antérieur et qui correspond au rayon Reₒ<Ri est décalée en hauteur sur une distance δ d'une ligne L' sécante à la bosse 22 et qui définit le rayon Re de l'extrémité amont 23' du capot coulissant selon l'invention, tel que Re<Ri. Par cette extrémité amont 23' passe, en situation de poussée directe, un plan P'1 parallèle à P1. A la distance δ, correspond, d'une part, une distance Δ1 entre les plans P1 et P'1 et, d'autre part, une distance Δ2 entre le plan P2 et le plan P'2, parallèle à P2 et sécant à ligne L' sur la peau intérieure 21. Comme on le voit clairement, du fait de la différence de pente entre les peaux 9 et 21, Δ2>Δ1 et la différence entre ces deux grandeurs entraîne une différence identique entre les courses C et C' nécessaires pour que, respectivement, l'extrémité 23 (art antérieur) et l'extrémité 23' (invention) du capot coulissant atteignent la position la plus proche possible de la peau intérieure 21. La course nécessaire se trouve donc réduite selon l'invention.

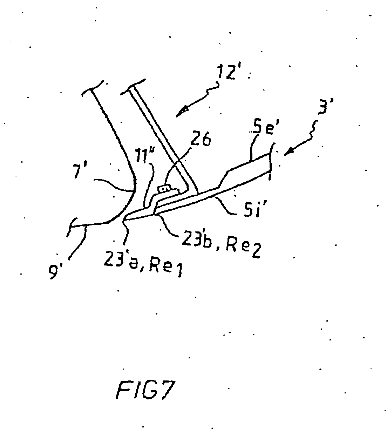

En conséquence, la semelle 11' de la pièce 12' atteint une position sensiblement tangente à la bosse 22 au terme d'une course plus courte C' du capot coulissant 3' (comparer également les figures 3 et 6), ce qui, d'une part, permet de réduire la taille des vérins utilisés pour sa manoeuvre et, d'autre part, positionne la cloison 13' de la pièce 12' à proximité immédiate de l'extrémité aval 20a' de l'ensemble à grilles 19', contraignant ainsi la quasi-totalité du flux inversé à traverser ledit ensemble selon les flèches F3 (figure 6) et évitant que des gaz viennent s'engouffrer dans la cavité 18. Les fuites de flux froid se limitent sensiblement à celles qui se font selon F1, en poussée directe.

Pour améliorer encore l'efficacité de l'inversion, l'invention prévoit, comme le montrent les figures 3 à 6, d'allonger la cloison 13' de la pièce 12' de telle sorte qu'en situation d'inversion de poussée, son extrémité libre 25 soit à proximité immédiate de l'extrémité aval 20a' de l'ensemble à grilles 19', et de donner à cette extrémité aval 20a' une orientation alignée avec la direction générale de ladite cloison.

La semelle étant rapportée et démontable, l'assemblage peut être fait, par exemple, comme illustré à la figure 7. On y voit l'extrémité amont de la double paroi 5e', 5i' du capot coulissant 3', à laquelle est solidarisée la pièce 12'. Une semelle 11" est boulonnée en 26 sur la pièce 12' et le capot 3'. L'extrémité 23'a de la semelle 11" a un rayon Re₁ inférieur à Ri et l'extrémité 23'b du capot 3' a un rayon Re₂ supérieur à Ri.

On comprend aisément que, sans la semelle 11", le capot coulissant 3' peut franchir la bosse 22 sans difficulté et que la semelle 11" n'est boulonnée en place que lorsque le capot coulissant 3' n'a à accomplir que sa course "escamoté/déployé", pour passer du mode jet direct au mode inversion de poussée, et vice versa.

La configuration décrite 12 heures/6 heures des nacelles sous voilure est évidemment transposable au cas 9 heures/3 heures des nacelles latérales.

## Revendications

1. Inverseur de poussée pour moteurs à réaction, du type à grilles, comprenant :
un capotage dans lequel est ménagée une ouverture (24) qui, en situation de poussée directe des gaz, est fermée par un capot coulissant (3') et qui, en situation dlinversion de poussée, est dégagée par déplacement en translation vers l'aval, par référence au sens d'écoulement des gaz, dudit capot coulissant (3'),
un canal de soufflante (10) défini entre une peau intérieure (21) et une peau extérieure (9) dans laquelle s'intègre la peau intérieure (5i) du capot coulissant (3') en situation de poussée directe,
. ladite peau extérieure (5i) du canal de soufflante (10) ayant, un rayon Re, dans le plan (P'1), dit "plan amont", transversal à l'axe longitudinal de l'inverseur et passant par l'extrémité amont (23') du capot coulissant en situation de poussée directe, et
. la peau intérieure (21) du canal de soufflante (10) présentant, en aval de ce plan amont (P'1), un rayon maximal Ri, dans un plan (P2), dit "plan aval", parallèle au plan amont (P'1), ledit rayon Re étant inférieur audit rayon Ri, l'extrémité amont (23') dudit capot coulissant (3') venant, en situation d'inversion de poussée, sensiblement bloquer le canal de soufflante (10) en amont dudit plan aval (P2),
**caractérisé en ce que** l'extrémité intérieure amont dudit capot coulissant (3') comporte une semelle amovible (11") qui s'étend vers l'amont à partir de ladite extrémité et qui est intégrée au profil de la peau extérieure (9') du canal de soufflante (10), le rayon Re₁ du bord amont (23'a) de ladite semelle étant inférieur audit rayon Ri et le rayon Re₂ du bord (23'b) de ladite extrémité amont dudit capot coulissant (3') étant supérieur audit rayon Ri.

2. Inverseur selon la revendications 1 dans lequel, d'une part, le capot coulissant (3') est adapté à bloquer sensiblement le canal de soufflante (10) au moyen d'une cloison (13') qui en dépend et s'étend vers l'extérieur à partir de son extrémité amont en se terminant par un bord libre (25) et dans lequel, d'autre part, un ensemble à grilles (19') de pilotage de flux inversé équipe l'ouverture (24) ménagée dans le capotage, **caractérisé en ce que** ladite cloison (13') a, en situation d'inversion de poussée, son extrémité libre (25) à proximité immédiate de l'extrémité aval (20a') dudit ensemble à grilles (19'), et **en ce que** ladite extrémité aval (20a') a une orientation alignée avec la direction générale de ladite cloison (13').

## Patentansprüche

1. Schubumkehrvorrichtung mit Gittern für Strahltriebwerke, umfassend:
eine Verkleidung, in der eine Öffnung (24) vorgesehen ist, die in der Situation direkter Schub der Gase durch eine verschiebbare Kappe (3') geschlossen ist und die in der Situation Schubumkehr durch Translationsbewegung dieser verschiebbaren Kappe (3') stromabwärts bezüglich der Strömungsrichtung der Gase freigelegt ist,
einen Gebläsekanal (10), der zwischen einer Innenhaut (21) und einer Außenhaut (9) abgegrenzt ist, in die die Innenhaut (5i) der verschiebbaren Kapape (3') in der Situation direkter Schub integriert ist,
wobei diese Außenhaut (5i) des Gebläsekanals (10) einen Radius Re in der "stromauf gelegene Ebene" genannten Ebene (P'1) hat, die sich zur Längsachse des Umkehrers quer erstreckt und in der Situation direkter Schub durch das stromauf gelegene Ende (23') der verschiebbaren Kappe verläuft, und
die Innenhaut (21) des Gebläsekanals (10) stromab dieser stromauf gelegenen Ebene (P'1) einen maximalen Radius Ri in einer "stromab gelegene Ebene" genannten Ebene (P2) hat,
die zur stromauf gelegenen Ebene (P'1) parallel ist, wobei dieser Radius Re kleiner als dieser Radius Ri ist, wobei
das stromauf gelegene Ende (23') der verschiebbaren Kappe (3') in der Situation Schubumkehr den Gebläsekanal (10) stromauf dieser stromab gelegenen Ebene (P2) im Wesentlichen blockiert,
**dadurch gekennzeichnet, dass** das innere stromauf gelegene Ende der verschiebbaren Kappe (3') eine abnehmbare Sohle (11") aufweist, die sich von diesem Ende aus stromaufwärts erstreckt und die in das Profil der Außenhaut (9') des Gebläsekanals (10) integriert ist, wobei der Radius Re1 des stromauf gelegenen Rands (23'a) dieser Sohle kleiner als der Radius Ri ist und der Radius Re2 des Rands (23'b) dieses stromauf gelegenen Endes der verschiebbaren Kappe (3') größer als der Radius Ri ist.

2. Umkehrvorrichtung nach Anspruch 1, bei der einerseits die verschiebbare Kappe (3') dafür ausgelegt ist, den Gebläsekanal (10) mit Hilfe einer Wand (13') im wesentlichen zu blockieren, die von ihr abhängt und sich von ihrem stromauf gelegenen Ende aus nach außen erstreckt, indem sie mit einem freien Rand (25) endet, und bei der andererseits eine Einheit von Gittern (19') zur Steuerung des umgekehrten Stroms die in der Verkleidung vorgesehene Öffnung (24) bestückt, **dadurch gekennzeichnet, dass** das freie Ende (25) dieser Wand (13') in der Situation Schubumkehr in unmittelbarer Nähe des stromab gelegenen Endes (20'a) der Einheit von Gittern (19') liegt, und dass die Ausrichtung dieses stromab gelegenen Endes (20a') mit der allgemeinen Richtung der Wand (13') in Flucht ist.

## Claims

1. Thrust reverser for jet engines, of the cascade type, comprising
a cowling in which there is formed an opening (24) which, when in a direct thrust mode, is closed by a sliding cowl (3') and which, in a thrust-reversal mode, is uncovered by the downstream translation, with reference to the direction of flow of the gases, of the said sliding cowl (3'),
a fan duct (10) being defined between an interior skin (21) and an exterior skin (9) into which the interior skin (5i) of the sliding cowl (3') is incorporated in a direct-thrust mode,
the said exterior skin (5i) of the fan duct (10) having a radius Re in the plane (P'1), known as the "upstream plane", transversal to the longitudinal axis of the reverser and passing through the upstream end (23') of the sliding cowl in the direct thrust mode,
and the interior skin (21) of the fan duct (10) having, downstream of this upstream plane (P'1), a maximum radius Ri in a plane (P2) known as the "downstream plane" parallel to the upstream plane (P'1), the upstream end (23') of the said sliding cowl (3') substantially blocking the fan duct (10) upstream of the said downstream plane (P2) in a thrust-reversal mode,
**characterized in that** the upstream interior end of the said sliding cowl (3') comprises a removable base plate (11'') which extends upstream from the said end and which is incorporated into the profile of the exterior skin (9') of the fan duct (10), the radius Re₁ of the upstream edge (23'a) of the said base plate being smaller than the said radius Ri and the radius Re₂ of the edge (23'b) of the said upstream end of the said sliding cowl (3') being greater than the said radius Ri.

2. Thrust reverser according to Claim 1 in which, on the one hand, the sliding cowl (3') is designed to substantially block the fan duct (10) by means of a partition (13') which is affixed thereto and extends outwards from its upstream end, ending in a free edge (25) and in which, on the other hand, a cascade assembly (19') for directing the reverse flow is fitted to the opening (24) formed in the cowling, **characterized in that** the said partition (13'), in the thrust-reversal mode, has its free end (25) in close proximity to the downstream end (20a') of the said cascade assembly (19') and **in that** the said downstream end (20a') has an orientation aligned with the overall direction of the said partition (13').
